# EUROPÄISCHE PATENTSCHRIFT

(11) **EP 0 588 823 B1**
(45) Veröffentlichungstag und Bekanntmachung des Hinweises auf die Patenterteilung: **26.07.1995**
(21) Anmeldenummer: 92910452.9
(22) Anmeldetag: 20.05.1992
(51) Int. Cl.: H01M 2/12, B65D 51/16, B65D 41/18

(54) **DICHTUNGSVENTIL FÜR BEHÄLTERÖFFNUNGEN**
SEALING VALVE FOR APERTURES IN CONTAINERS
VALVE D'ETANCHEITE POUR OUVERTURES DE RECIPIENTS

(30) Priorität: 08.06.1991 DE 9107094 U; 30.10.1991 DE 4135711
(43) Veröffentlichungstag der Anmeldung: 30.03.1994
(73) Patentinhaber: Busak + Shamban GmbH & Co., D-70565 Stuttgart (DE)
(72) Erfinder: SCHOLLENBERGER, Gerd, D-7126 Sersheim (DE)
(74) Vertreter: KOHLER SCHMID + PARTNER
(86) Internationale Anmeldenummer: DE9200424
(87) Internationale Veröffentlichungsnummer: WO9222932

(56) Entgegenhaltungen:
- EP-A- 0 373 150
- DE-B- 1 020 248
- US-A- 4 442 184
- US-A- 4 709 832
- PATENT ABSTRACTS OF JAPAN vol. 9, no. 49 (E-300)(1772) 2. März 1985 & JP,A,59 191 260 (NIHON DENCHI) 30. Oktober 1984

## Beschreibung

Die Erfindung betrifft ein Dichtungsventil für Behälteröffnungen und besteht aus einem Deckelteil und einem daran angeformten Wandteil und einem rings um den Wandteil laufenden Dichtungswulst, wobei der Dichtungswulst auf der Innenseite der Kappenwand verläuft.

Ein derartiges Dichtungsventil ist durch die japanische Patentanmeldung 58-67407 bekanntgeworden.

Die Zellen von Akkumulatorbatterien benötigen ein Entgasungsventil, welches das Austreten von Batteriesäure und H₂-Gas bei normalen Druckverhältnissen sicher verhindert und bei definierten Überdrücken innerhalb der Batteriezelle öffnet und eine Entgasung gestattet. Da solche Akkumulatorbatterien, insbesondere Bleiakkumulatoren für Kraftfahrzeuge Massenartikel sind, müssen deren Entgasungsventile möglichst kostengünstig hergestellt werden können.

Bei früheren Batterieausführungen war es üblich, einen Verschlußstopfen mittels eines Schraubgewindes in eine Zellenöffnung einzuschrauben. Dieser Stopfen wies eine feine Bohrung auf, die eine Entgasung der Batteriezelle auch bei eingedrehtem Verschlußstopfen ermöglichte. Dabei trat jedoch häufig Batterieflüssigkeit nach außen und bewirkte eine Korrosion der die Batterie umgebenden Blechteile.

Eine weitere bekannte Lösung bestand darin, über einen zylindrischen Entgasungsstutzen der Akkumulatorbatterie eine zylindrisch ausgebildete Dichtungskappe zu stülpen, die aus einem gummielastischen Werkstoff bestand. Jedoch traten bei der Massenfertigung dieser bekannten Dichtungskappen aus einem aus Elastizitätsgründen geforderten gummielastischen Werkstoff, z. B. Silikonkautschuk, PU, thermoplastische Elastomere unvermeidlich große Toleranzschwankungen des Innendurchmessers auf, wodurch sich die Fertigungsausbeute nachteilig verringerte oder die Dichtungswirkung in Frage gestellt war. Zur Sicherstellung der Funktion war eine 100 % Kontrolle notwendig.

Aus der vorgenannten japanischen Schritt JP-A-59-191 260 mit der Anmeldungsnummer 58-67 407 ist ein Batteriestopfen bekannt, der breitflächig am Außenumfang eines Entgasungsstutzens anliegt. Am Stutzen selbst sind Einschnitte vorgesehen, über die das unter Druck stehende Medium auf den Stopfen einwirkt.

Aufgabe der Erfindung ist es, ein als Entgasungsventil für Akkumulatorbatterien geeignetes Dichtungsventil so zu ermöglichen, daß ein sicheres Entgasen bei gleichzeitiger Dichtheit gegen Austreten der Batterieflüssigkeit und eine kostengünstige Herstellung bei großer Ausbeute erreicht wird.

Der zur Lösung der obigen Aufgabe dienende Grundgedanke der Erfindung besteht darin, einen rings um den Wandteil des Dichtungsventils laufenden Dichtungswulst vorzusehen, der zum einen die Dichtungs- und zum anderen die Entgasungsfunktion hat, wobei mindestens ein Steuerkanal auf der Innenseite einer Kappe oder eines Stopfens vorgesehen ist, der vom Kappendeckel bis zum Dichtungswulst führt. Durch den Dichtungswulst werden die Toleranzschwankungen des Innendurchmessers bei der Großserienherstellung aufgefangen. Ferner werden mittels der bis zum Rand des Dichtungswulstes führenden Steuerkanäle die zwischen Außenwand des Entgasungsstutzens und Innenwand der oben beschriebenen bekannten Dichtungskappe auftretenden Adhäsionskräfte vermieden, die bisher eine sichere Entgasung in Frage stellten. Die Steuerkanäle bewirken, daß bei einem bestimmten Überdruck im Inneren der Batteriezelle das Dichtungsventil genau an den Stellen öffnet, wo die Steuerkanäle am Dichtungswulst enden; dadurch läßt sich ein definierter Entgasungsdruck von circa 80 bis 120 mbar einstellen.

In einer bevorzugten Ausführungsform hat das erfindungsgemäße Dichtungsventil Kappenform und der Dichtungswulst verläuft auf der Innenseite des Wandteils der Kappe. Bevorzugt weist der Dichtungswulst mindestens eine ausgeprägte Kante auf, die sich im Fall der Dichtungskappe an die Außenwand des Entgasungsstutzens anpreßt.

Prinzipiell sind alle gummielastischen Werkstoffe zur Herstellung des erfindungsgemäßen Dichtungsventils geeignet; bevorzugt werden jedoch beispielsweise Fluorelastomere FPM, FKM, EPDM sowie auch Silikonkautschukmaterialien verwendet.

Das Dichtungsventil ist bevorzugt kreiszylindrisch geformt, und der Deckelteil ist flach ausgebildet.

Besonders vorteilhaft ist es, wenn drei Steuerkanäle symmetrisch jeweils um 120° versetzt angeordnet sind.

Bei einer weiter verbesserten Ausführungsart ist der Rand des Dichtungsventils mit Einkerbungen versenen, deren Anzahl der Anzahl der Steuerkanäle entspricht und die jeweils mit dem Steuerkanal bzw. den Steuerkanälen fluchten. Diese Randeinkerbungen gehen so tief, daß sie die ausgeprägte Kante des Dichtungswulstes nicht schneiden und ihr der ausgeprägten Kante genenüberliegender Kerbengrund ist etwa so breit wie die Steuerkanäle.

Es hat sich als besonders günstig erwiesen, wenn die Randeinkerbungen ein etwa kreisbogenförmiges Profil und zum Rand der Dichtungskappe hin eine scharfe Kante haben. Mit Hilfe der Randeinkerbungen läßt sich der bestimmte Überdruck im Inneren der Batteriezelle, bei dem eine Entgasung stattfindet vorteilhafterweise noch genauer einstellen.

Die Dicke des Dichtungswulstes kann leicht je nach Anwendungsfall durch Versuchsreihen festgelegt werden, ist jedoch bevorzugt geringer als die Wandstärke des Wandteils.

Zweckmäßigerweise beträgt die Tiefe des Steuerkanals bzw. der Steuerkanäle etwa die Kälfte der Dicke des Wandteils.

Bei einer alternativen Ausführungsform ist das erfindungsgemäße Dichtungsventil nicht kappenförmig sondern stopfenförmig ausgebildet, wobei der Dichtungswulst und gegebenenfalls die Steuerkanäle an der Außenwand vorgesehen sind.

Weitere Einzelheiten und Vorteile der Erfindung werden im folgenden in mehreren Ausführungsbeispielen anhand der Zeichnung näher beschrieben. Es zeigt:
- Fig. 1: eine Ausführungsart eines erfindungsgemäßen Dichtungsventils mit unterschiedlichen Dichtungswulstkonturen, die mindestens eine Wulstkante aufweisen;
- Fig. 2: ein Dichtungsventil mit Steuerkanälen, das Dichtungswulstkonturen, wie in Fig. 1 gezeigt, aufweisen kann;
- Fig. 3: eine alternative Ausführungsart bei der das erfindungsgemäße Dichtungsventil stopfenartig ausgebildet ist und
- Fig. 4: eine auf der Ausführungsart von Fig. 2 beruhende weiter verbesserte Ausführung eines Dichtungsventils.

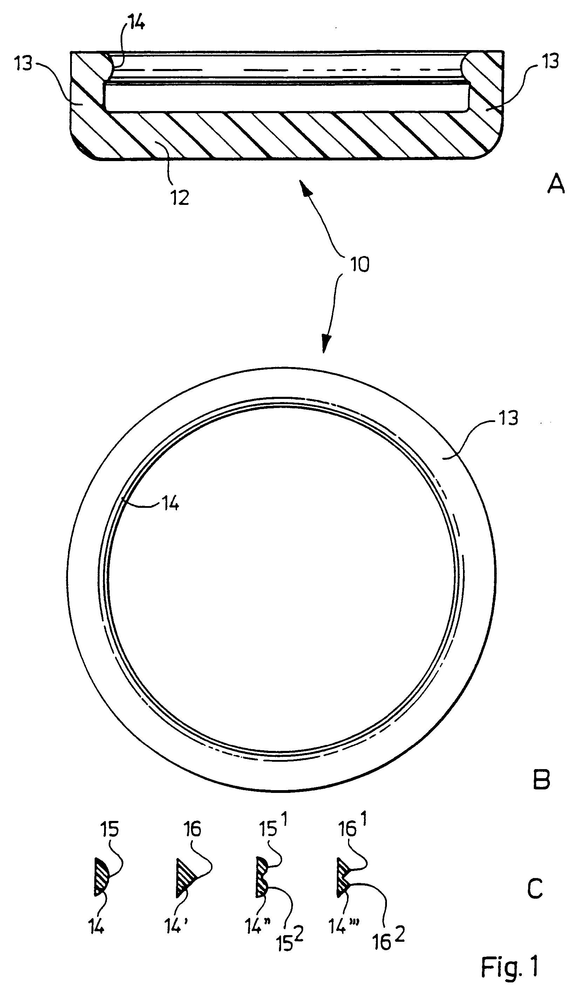

Die in Fig. 1 A und B im Schnitt und in Draufsicht dargestellte, mit 10 bezeichnete kappenförmige Ausführung weist einen senkrecht zu einem kreisrunden Deckelteil 12 ragenden zylindrischen Wandteil 13 auf, an dessen Innenseite ein Ringwulst 14 vorgesehen ist. Die Darstellung in Fig. 1 B zeigt, daß der Dichtungswulst 14 ringsum geschlossen ist. Fig. 1 C zeigt verschieden geformte Dichtungswulstkonturen 14, 14′, 14˝ und 14′′′. Wesentlich ist, daß der Dichtungswulst mindestens eine Wulstkante aufweist, die in Fig. 1 C mit 15, 16, 15¹, 152, 16¹ und 16² bezeichnet ist.

Der in dieser Weise ausgebildete Dichtungswulst ermöglicht den Ausgleich von bei der Massenfertigung des Dichtungsventils auftretenden Toleranzschwankungen des Innendurchmessers des Wandteils 13, da der Dichtungswulst an der Außenwand des Entgasungsstutzens nur längs seiner Wulstkante angepreßt ist. Dagegen liegt die Innenseite des Wandteils im wesentlichen frei von der Außenwand des Entgasungsstutzens. Dadurch treten die beschriebenen, unerwünschten Adhäsionskräfte zwischen der Innenseite des Wandteils und der Außenwand des Entgasungsstutzens nicht auf und es läßt sich ein gewünschter Entgasungsdruck durch das erfindungsgemäße Dichtungsventil einhalten.

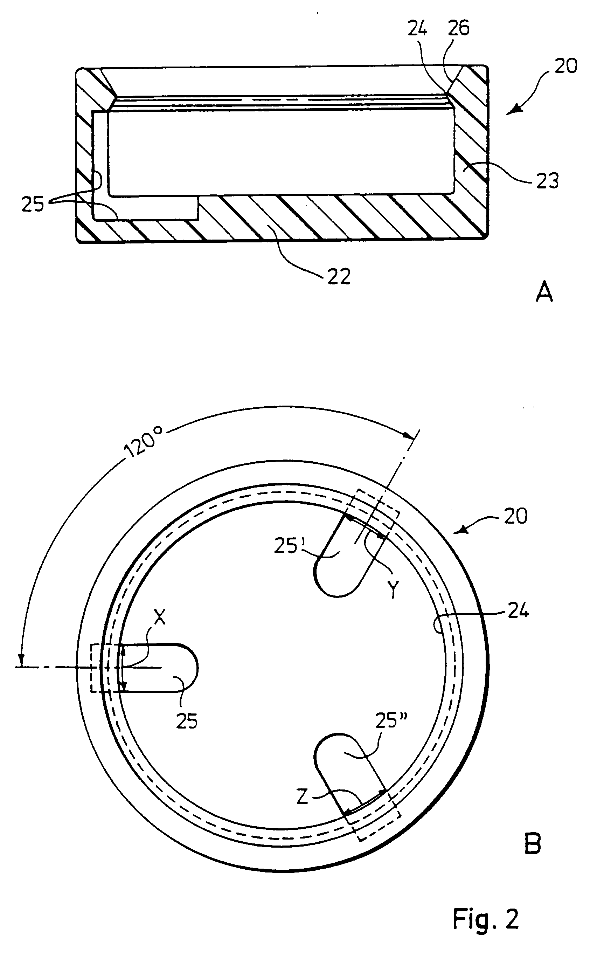

In Fig. 2 ist die erfindungsgemäße Ausführungsart jeweils im Schnitt (Fig. 2 A) und in Draufsicht (Fig. 2 B) gezeigt. Diese mit 20 bezeichnete Ausführungsart ist ebenfalls kreiszylindrisch geformt und weist neben dem Dichtungswulst 24 drei gegeneinander jeweils um 120° versetzte Steuerkanäle 25, 25′ und 25˝ auf. In Fig. 2 A ist ersichtlich, daß diese Steuerkanäle auf der Innenseite von einem Deckelteil 22 bis zum Dichtungswulst 24 auf der Innenseite des Wandteils 23 führen. Die Innenseite des Kappenrandes verläuft schräg zur Kante des Dichtungswulstes 24 und bildet dadurch eine das Aufstecken der Kappe erleichternde Einlauf- oder Zentrierschräge 26. Bei dieser bevorzugten Ausführungsform tritt die Entgasung lediglich an den mit X, Y, Z bezeichneten Stellen am Dichtungswulst 24 auf. Dadurch läßt sich der Entgasungsdruck noch definierter einstellen. Aus Stabilitätsgründen führen die Steuerkanäle 25, 25′ und 25˝ nicht bis zum Mittelpunkt des Deckelteils 22, wie Fig. 2 B deutlich zeigt.

Bei dieser Ausführungsart werden die Abmessungen des Dichtungsventils den Erfordernissen entsprechend gewählt, die Anzahl und Dicke und die Kontur des Dichtungswulstes 24 und gegebenenfalls auch die Tiefe der Steuerkanäle durch Versuchsreihen ermittelt.

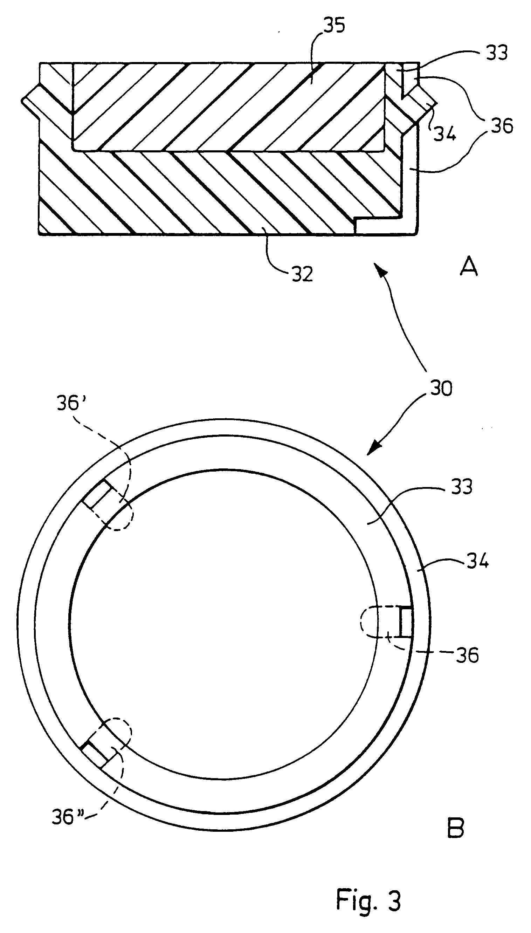

Eine alternative Ausführungsform 30 eines erfindungsgemäßen Dichtungsventils zeigt Fig. 3 A und B. Ein Dichtungswulst 34 ist ringförmig um die Außenwand eines Wandteils 33 vorgesehen. Der Wandteil 33 ragt senkrecht zu einem Deckelteil 32. Das Dichtungsventil 30 wird nicht über einen Öffnungsstutzen gestülpt sondern in eine Öffnungsbohrung eines Behälters eingesteckt. Selbstverständlich sind auch beim Dichtungsventil 30 Steuerkanäle 36, 36′, 36˝ an den Außenseiten des Deckelteils 32 und des Wandteils 33 vorgesehen. Um die Dichtungswirkung noch weiter zu verstärken, kann gegebenenfalls ein zentraler Stopfen 35 in das Dichtungsventil 30 gemäß Fig. 3 eingesetzt werden. Für die Herstellung der verschiedenen beschriebenen Ausführungen des erfindungsgemäßen Dichtungsventils werden gummielastische Materialien, beispielsweise Silikonkautschuk PU, PVC und bevorzugt Fluorelastomere, wie FPM, FKM verwendet. Ein solches Fluor- elastomer wird unter der Handelsmarke "Viton" von der Firma DuPont angeboten.

Der Stopfen 35 gemäß Fig. 3 kann beispielsweise auch aus einem zähelastischen oder metallischen Werkstoff bestehen und auch an seinem oberen, äußeren Rand einen Kragen tragen, der eine Hemmung gegen zu weites Einstecken des Stopfens bildet.

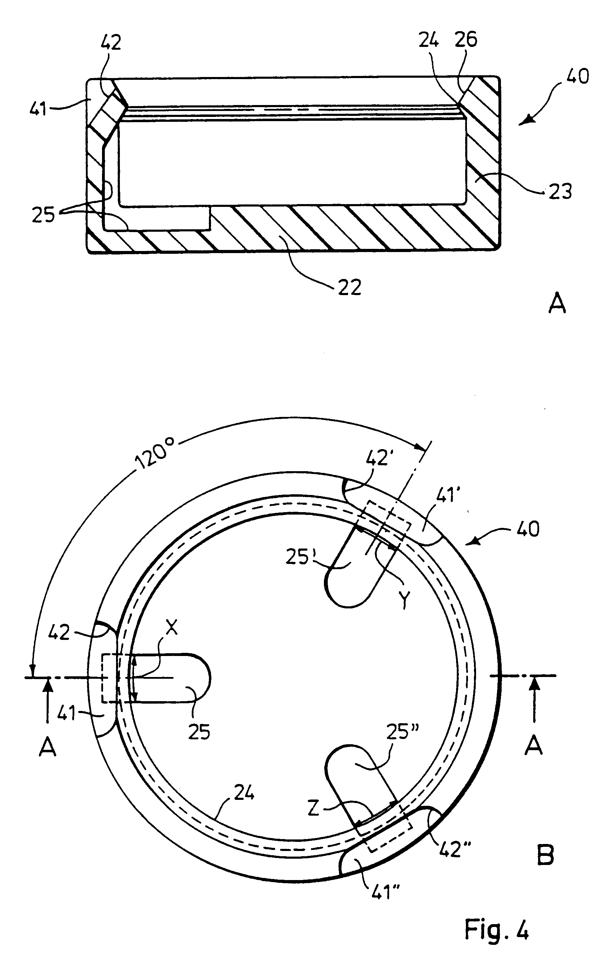

Fig. 4 zeigt eine weiter verbesserte Ausführung eines Dichtungsventils gemäß der Erfindung, die auf der Ausführung gemäß Fig.2 beruht. Die mit den entsprechenden Teilen in Fig.2 übereinstimmenden Teile sind in Fig.4 mit denselben Bezugziffern bezeichnet und werden nicht noch einmal beschrieben.

Die allgemein mit dem Bezugszeichen 40 bezeichnete Ausführungsart ist durch Randeinkerbungen 41, 41′ und 41˝ gekennzeichnet, die jeweils mit den Steuerkanälen 25 in ihrem Kerbengrund fluchten und etwa doppelt so breit wie die Steuerkanäle 25 sind. Die Randeinkerbungen 41, 41′ und 41˝ haben bevorzugt ein fertigungstechnisch besonders günstiges Profil und sind z. B. kreisbogenförmig ausgebildet. Die Tiefe der Randeinkerbungen reicht nicht bis zur ausgeprägten Kante des Dichtungswulstes. Besonders günstig ist es, wenn die Einkerbungen in dem zur Kante 24 des Dichtungswulstes weisenden Bereich scharfe Kanten 42, 42′ und 42˝ bilden.

Selbstverständlich ist die Erfindung nicht auf die in Fig. 4 gezeigte besonders vorteilhafte Ausführungsform mit drei Steuerkanälen 25, 25′ und 25˝ und entsprechend drei Randeinkerbungen 41, 41′ und 41˝ beschränkt. Prinzipiell kann eine für den jeweiligen Anwendungsfall zweckmäßige Anzahl von Steuerkanälen und eine entsprechende Anzahl von Randeinkerbungen gewählt werden.

## Patentansprüche

1. Dichtungsventil für Behälteröffnungen aus gummielastischem Material, bestehend aus einem Deckelteil (12; 22; 32) und einem daran angeformten umlaufenden Wandteil (13; 23; 33), und einem rings um den Wandteil (13; 23; 33) laufenden Dichtungswulst (14; 14′; 14˝; 14′′′; 24; 34), wobei der Dichtungswulst (14; 14′; 14˝; 14′′′; 24; 34) auf der Innenseite der Kappenwand verläuft,
dadurch gekennzeichnet, daß mindestens ein Steuerkanal (25) auf der Innenseite einer Kappe (20) oder eines Stopfens (32, 35) vorgesehen ist, der vom Kappendeckel bis zum Dichtungswulst (24) führt.

2. Dichtungsventil nach Anspruch 1, dadurch gekennzeichnet, daß der Dichtungswulst mindestens eine ausgeprägte Dichtungskante aufweist.

3. Dichtungsventil nach einem der vorangehenden Ansprüche, dadurch gekennzeichnet, daß der Wandteil kreiszylindrisch und der Deckelteil flach ausgebildet, und daß der Dichtungswulst überall gleich dick ist.

4. Dichtungsventil nach Anspruch 1 bis 3, dadurch gekennzeichnet, daß drei symmetrische Steuerkanäle (25, 25′, 25˝) jeweils um 120° versetzt vorgesehen sind.

5. Dichtungsventil nach einem oder mehreren der vorangehenden Ansprüche, dadurch gekennzeichnet, daß die Dicke des Dichtungswulstes geringer als die Wandstärke des Wandteils ist.

6. Dichtungsventil nach einem oder mehreren der Ansprüche 1 bis 5, dadurch gekennzeichnet, daß die Tiefe des Steuerkanals (25) bzw. der Steuerkanäle (25, 25′, 25˝) etwa die Hälfte der Wandstärke der Kappenwand beträgt.

7. Dichtungsventil nach einem oder mehreren der Ansprüche 1 bis 6, dadurch gekennzeichnet, daß im Kappenrand Einkerbungen (41, 41′, 41˝) vorgesehen sind, die mit den Steuerkanälen (25, 25′, 25˝) fluchten und deren Anzahl der Anzahl der Steuerkanäle entspricht, wobei die Tiefe der Randeinkerbungen so gewählt ist, daß die ausgeprägte Dichtungskante des Dichtungswulstes nicht von den Randeinkerbungen geschnitten wird.

8. Dichtungsventil nach Anspruch 7, dadurch gekennzeichnet, daß die Breite der Randeinkerbungen an dem der ausgeprägten Dichtungskante gegenüberliegenden Kerbengrund etwa der Breite der Steuerkanäle entspricht.

9. Dichtungsventil nach Anspruch 7 oder 8, dadurch gekennzeichnet, daß die Randeinkerbungen so geformt sind, daß der neben der ausgeprägten Dichtungskante verlaufende Abschnitt des Kerbengrunds eine scharfe Kante (42, 42′, 42˝) bildet.

10. Verwendung eines Dichtungsventils nach einem der vor hergehenden Ansprüche als Entgasungsventil für Entgasungsöffnungen von Akkumulator-Batteriezellen.

## Claims

1. Sealing valve for container openings made from a rubber-elastic material, comprising a cover element (12; 22; 32) and a surrounding wall element (13; 23; 33) formed thereon, and a sealing bead (14; 14′; 14˝; 14′′′; 24; 34) extending around the wall element (13; 23; 33), wherein the sealing bead (14; 14′; 14˝; 14′′′; 24; 34) extends on the inner side of the cap wall,
characterized in that, on the inner side of a cap (20) or of a stopper (32, 35), at least one control channel (25) is provided which runs from the cap top to the sealing bead (24).

2. Sealing valve according to claim 1, characterized in that the sealing bead exhibits at least one prominent sealing edge.

3. Sealing valve according to one of the previous claims, characterized in that the wall element has a circular-cylindrical form, the cover element is flat, and the sealing-bead exhibits a constant thickness.

4. Sealing valve according to any one of claims 1 to 3, characterized in that three symmetric control channels (25, 25′, 25˝) are provided for each displaced 120° from another.

5. Sealing valve according to one or more of the previous claims, characterized in that the thickness of the sealing bead is less than the wall thickness of the wall element.

6. Sealing valve according to one or more of claims 1 to 5, characterized in that the depth of the control channel (25) or the control channels (25, 25′, 25˝) assumes a value of approximately half the wall thickness of the cap wall.

7. Sealing valve according to one or more of claims 1 to 6, characterized in that notches (41, 41′, 41˝) are provided for in the edge of the cap which are flush with the control channels (25, 25′, 25˝) and whose number corresponds to the number of control channels, whereby the depth of the edge notches is chosen in such a manner that the prominent sealing edge of the sealing bead is not cut by the edge notches.

8. Sealing valve according to claim 7, characterized in that the width of the edge notches at the bottom of the notch lying across from the prominent sealing edge corresponds to approximately the width of the control channels.

9. Sealing valve according to claim 7 or 8, characterized in that the edge notches are formed in such a manner that the section of the notch bottom running adjacent to the prominent sealing edge forms a sharp edge (42, 42′, 42˝).

10. The use of a sealing valve according to one of the preceding claims as a gas release valve for gas release openings of storage battery cells.

## Revendications

1. Valve d'étanchéité pour des ouvertures de récipients, en matériau présentant l'élasticité du caoutchouc, comprenant une partie de couvercle (12 ; 22 ; 32) et une partie de paroi périphérique (13 ; 23 ; 33) formée sur cette partie de couvercle, et un bourrelet d'étanchéité (14 ; 14′; 14˝ ; 14′′′ ; 24 ; 34) qui s'étend tout autour de la partie de paroi (13; 23; 33), le bourrelet d'étanchéité (14 ; 14′ ; 14˝ ; 14′′′ ; 24 ; 34) s'étendant sur la face intérieure de la paroi de capuchon,
caractérisée en ce qu'au moins un canal de commande (25) est prévu sur la face intérieure d'un capuchon (20) ou d'un bouchon (32, 35), qui mène depuis le couvercle de capuchon jusqu'au bourrelet d'étanchéité (24).

2. Valve d'étanchéité selon la revendication 1, caractérisée en ce que le bourrelet d'étanchéité présente au moins une arête d'étanchéité prononcée.

3. Valve d'étanchéité selon l'une des revendications précédentes, caractérisée en ce que la partie de paroi est réalisée de manière cylindrique et la partie de couvercle est réalisée de manière plane, et en ce que le bourrelet d'étanchéité a partout la même épaisseur.

4. Valve d'étanchéité selon les revendications 1 à 3, caractérisée en ce qu'il est prévu trois canaux de commande symétriques (25, 25′, 25˝) décalés de 120° les uns des autres.

5. Valve d'étanchéité selon l'une ou plusieurs des revendications précédentes, caractérisée en ce que l'épaisseur du bourrelet d'étanchéité est inférieure à l'épaisseur de la partie de paroi.

6. Valve d'étanchéité selon l'une ou plusieurs des revendications 1 à 5, caractérisée en ce que la profondeur du canal de commande (25) ou des canaux de commande (25, 25′, 25˝) s'élève à environ la moitié de l'épaisseur de la paroi de capuchon.

7. Valve d'étanchéité selon l'une ou plusieurs des revendications 1 à 6, caractérisée en ce qu'il est prévu dans la bordure du capuchon des entailles (41, 41′, 41˝) qui sont alignées avec les canaux de commande (25, 25′, 25˝) et dont le nombre correspond au nombre des canaux de commande, la profondeur des entailles de bordure étant choisie de telle manière que l'arête d'étanchéité prononcée du bourrelet d'étanchéité n'est pas coupée par les entailles de bordure.

8. Valve d'étanchéité selon la revendication 7, caractérisée en ce que la largeur des entailles de bordure, au niveau du fond des entailles situé à l'opposé de l'arête d'étanchéité prononcée, correspond environ à la largeur des canaux de commande.

9. Valve d'étanchéité selon l'une ou l'autre des revendications 7 et 8, caractérisée en ce que les entailles de bordure sont formées de telle façon que le tronçon du fond d'entaille qui s'étend à côté de l'arête d'étanchéité prononcée forme une arête vive (42, 42′, 42˝).

10. Utilisation d'une valve d'étanchéité selon l'une quelconque des revendications précédentes en tant que valve de dégazage pour des ouvertures de dégazage de cellules de batterie d'accumulateurs.
